# FASCICULE DE BREVET EUROPEEN

(11) **EP 0 751 530 B1**
(45) Date de publication et mention de la délivrance du brevet: **28.10.1998**
(21) Numéro de dépôt: 96401123.3
(22) Date de dépôt: 23.05.1996
(51) Int. Cl.: G21C 3/356

(54) **Grille-entretoise d'un assemblage de combustible pour un réacteur nucléaire comportant des ressorts rapportés**
Abstandshalter für Kernreaktorbrennstabbündel mit aufgebrachten Federn
Spacer grid for nuclear fuel assembly with fitted springs

(30) Priorité: 29.06.1995 FR 9507852
(43) Date de publication de la demande: 02.01.1997
(73) Titulaire: FRAMATOME, 92400 Courbevoie (FR); COGEMA, F-78141 Velizy Villacoublay (FR)
(72) Inventeur: Petit, Bernard, 69530 Brignais (FR)
(74) Mandataire: Bouget, Lucien

(56) Documents cités:
- EP-A- 0 025 393
- EP-A- 0 280 595
- EP-A- 0 452 706
- EP-A- 0 527 244
- FR-A- 2 168 059
- US-A- 3 679 546

## Description

L'invention concerne une grille-entretoise d'un assemblage de combustible pour un réacteur nucléaire comportant des ressorts rapportés.

Les assemblages de combustible des réacteurs nucléaires, en particulier des réacteurs nucléaires à eau légère, sont généralement constitués par un faisceau de crayons de combustible, c'est-à-dire de tubes en matériau absorbant peu les neutrons remplis par des pastilles de matière fissile. Le faisceau de crayons de combustible constituant un assemblage de combustible est maintenu par une ossature rigide comportant des grilles-entretoises espacées suivant la longueur du faisceau, des tubes-guides de direction longitudinale introduits et fixés à l'intérieur de certaines cellules des grilles-entretoises et des embouts d'extrémité assurant la fermeture de l'ossature et le maintien des crayons à chacune des extrémités de l'assemblage de combustible. Les grilles-entretoises sont constituées par des plaquettes entrecroisées délimitant des cellules de forme généralement parallélépipédique disposées suivant un réseau généralement à mailles carrées. Les grilles-entretoises assurent le maintien transversal des crayons de combustible dans le faisceau, les crayons de combustible passant à l'intérieur des cellules des grilles. De cette façon, les crayons ont une disposition régulière dans les directions transversales, imposée par les grilles. Certaines des cellules sont occupées par des tubes-guides qui sont reliés à leurs extrémités aux embouts de fermeture de l'assemblage. Chaque cellule d'une grille-entretoise reçoit, soit un crayon de combustible, soit un tube-guide.

Pour assurer le maintien transversal des crayons de combustible à l'intérieur des cellules des grilles-entretoises, il est nécessaire d'exercer sur ces crayons des forces de direction transversale et pour cela de prévoir des dispositifs de maintien portés par les parois des cellules de la grille et s'étendant vers l'intérieur des cellules.

Chacune des cellules présente une dimension telle qu'un jeu important soit ménagé entre le crayon et les parois de la cellule. Ce jeu est nécessaire pour permettre l'écoulement du fluide réfrigérant du réacteur nucléaire et pour faciliter le montage des crayons dans l'assemblage.

On a proposé des dispositifs de maintien des crayons de combustible dans les cellules des grilles-entretoises qui sont constitués par des ressorts ayant une partie active élastique venant en saillie à l'intérieur d'une cellule destinée à recevoir un crayon de combustible et des butées d'appui rigides également en saillie à l'intérieur de la cellule, en vis-à-vis des ressorts. Le crayon de combustible introduit dans la cellule est repoussé en position d'appui contre les butées par le ressort situé en vis-à-vis des butées.

Généralement, chacune des cellules de forme parallélépipédique destinée à recevoir un crayon de combustible comporte des ressorts sur deux parois adjacentes et deux jeux de deux butées d'appui sur deux parois adjacentes situées en vis-à-vis des parois sur lesquelles sont prévus des ressorts.

Dans le cas où les plaquettes constituant la grille-entretoise sont en un matériau à forte élasticité, on peut réaliser aussi bien les bossettes que les ressorts par découpage et repoussage de parties des parois des cellules, elles-même constituées par les plaquettes de la grille. Cependant, de telles grilles-entretoises ont une utilisation limitée, dans la mesure où les matériaux à forte élasticité et à haute résistance mécanique produisent une forte absorption des neutrons fournis par les éléments combustibles de l'assemblage.

On a donc proposé dans EP-A-0 280 595 de réaliser des grilles-entretoises à partir de plaquettes en un matériau absorbant faiblement les neutrons, tel qu'un alliage de zirconium. Dans ce cas, des ressorts en un matériau élastique, tel qu'un alliage de nickel, sont rapportés sur les parois des cellules situées en vis-à-vis de parois dans lesquelles on a réalisé des bossettes d'appui par découpage et repoussage du matériau des plaquettes. De manière habituelle, le ressort est réalisé sous la forme d'une épingle comportant deux branches ayant une partie courbe convexe destinée à constituer la partie active du ressort venant en saillie à l'intérieur d'une cellule de la grille-entretoise. Les ressorts en forme d'épingle sont engagés sur les parois destinées à les recevoir de manière que le ressort entoure complètement la paroi sur laquelle il est monté. La paroi est généralement traversée par des ouvertures ou fenêtres au niveau desquelles les deux branches du ressort peuvent venir en contact l'une avec l'autre pour être soudées, de telle sorte qu'on assure le maintien du ressort sur la paroi.

Les ressorts en forme d'épingle comportent généralement deux branches constituant deux parties actives de ressort venant en saillie dans deux cellules voisines de la grille. De tels ressorts sont appelés ressorts doubles. On utilise également des ressorts appelés ressorts simples qui comportent une seule branche active et dont la seconde branche comporte des bossages de maintien du ressort venant à l'intérieur d'ouvertures traversant la paroi de la grille. Dans le cas des ressorts simples également, le ressort est maintenu autour de la paroi de la grille par des soudures de jonction de ses deux branches.

La réalisation de ressorts en épingle est relativement complexe et les opérations de pose de ces ressorts qui nécessitent la réalisation de soudures allongent et compliquent les opérations de montage des grilles-entretoises. En effet, chacune des grilles-entretoises comporte plusieurs centaines de cellules et la plupart des cellules comporte deux parois sur lesquelles sont montés des ressorts.

Dans les cellules recevant des ressorts doubles, la déformation de l'une des branches du ressort est influencée par la déformation de l'autre branche. Les passages d'eau dans les cellules sont de plus de forme et de dimension variables, ce qui influe sur la répartition des courants d'eau de refroidissement autour des crayons combustibles.

En outre, le soudage des branches des ressorts peut entraîner certaines modifications des propriétés mécaniques du métal des ressorts et même une certaine fragilisation de ce métal.

Le but de l'invention est donc de proposer une grille-entretoise d'un assemblage de combustible pour un réacteur nucléaire constituée par des plaquettes métalliques entrecroisées délimitant un réseau régulier de cellules dont une partie au moins comporte, pour chaque cellule, au moins une paroi de séparation avec une cellule voisine constituée par une portion d'une plaquette, sur laquelle est rapporté et immobilisé un ressort de maintien d'un crayon de combustible destiné à être logé dans la cellule, la paroi de la cellule étant découpée et repoussée dans la cellule voisine suivant deux zones d'extrémité espacées dans une direction longitudinale de montage du ressort, pour constituer deux bossettes de maintien d'un crayon dans la cellule voisine, cette grille-entretoise comportant des ressorts qui peuvent être réalisés et montés de manière simple, sans nécessiter d'opération de soudage pour leur immobilisation sur les parois de la grille.

Dans ce but, chaque ressort est constitué par une lame simple métallique comportant deux parties d'extrémité sensiblement dans un même plan et une partie centrale en dehors du plan des parties d'extrémité, l'une au moins des parties d'extrémité étant munie latéralement de deux ailes pliées en dehors du plan de la partie d'extrémité, dans une direction opposée à la partie centrale du ressort, et
chaque paroi destinée à recevoir un ressort rapporté comporte dans une disposition adjacente à chacune des bossettes, en direction de la seconde bossette, une partie de maintien d'une extrémité du ressort et, dans une disposition adjacente à l'une au moins des parties de maintien, au moins une ouverture traversant la paroi.

Afin de bien faire comprendre l'invention, on va maintenant décrire, à titre d'exemple non limitatif, une grille-entretoise suivant l'invention et suivant plusieurs variantes de réalisation.

La figure 1 est une vue partielle en perspective d'une grille-entretoise suivant l'invention.

La figure 2 est une vue en coupe par un plan de direction axiale d'une paroi d'une cellule d'une grille-entretoise suivant l'invention et suivant un premier mode de réalisation comportant un ressort.

La figure 3 est une vue de face suivant 3 de la figure 2 de la paroi de la cellule.

La figure 4 est une vue en coupe analogue à la vue de la figure 2 montrant la paroi et le ressort, lors du montage du ressort.

La figure 5 est une vue en coupe transversale suivant 5-5 de la figure 2.

La figure 6 est une vue en coupe par un plan de direction axiale d'une paroi d'une cellule et d'un ressort d'une grille-entretoise suivant une première variante de réalisation.

La figure 7 est une vue en coupe analogue aux figures 4 et 6 d'une paroi d'une cellule et d'un ressort d'une grille-entretoise suivant une seconde variante de réalisation.

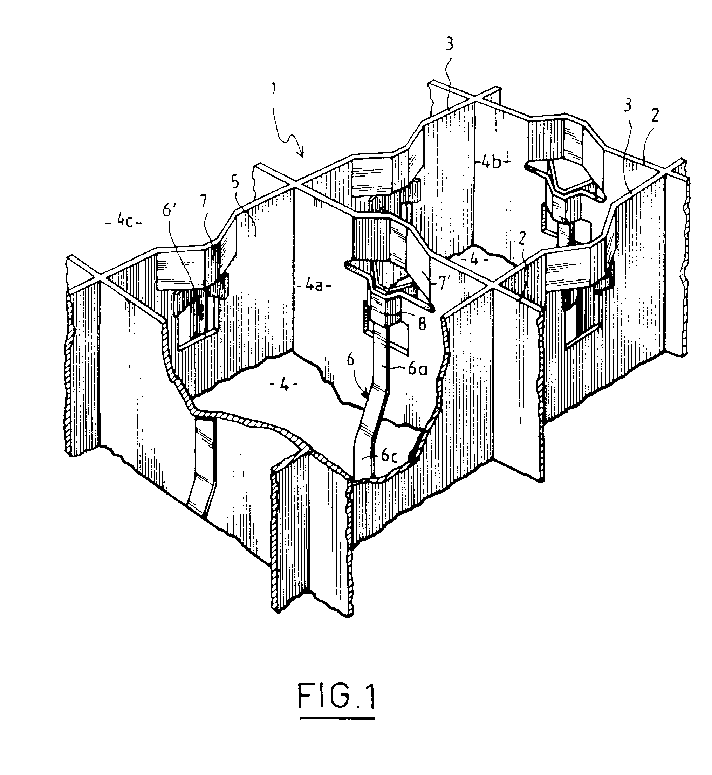

Sur la figure 1, on voit une partie d'une grille-entretoise suivant l'invention désignée de manière générale par le repère 1.

La grille 1 est constituée par des ensembles de plaquettes 2 et 3 entrecroisées, les plaquettes 2 d'un premier ensemble étant perpendiculaires aux plaquettes 3 du second ensemble de plaquettes.

Les plaquettes 2 et 3 délimitent des cellules 4 de forme parallélépipédique à section carrée comportant chacune quatre parois 5 constituées chacune par une portion d'une plaquette 2 ou 3.

La plus grande partie des cellules 4 de la grille-entretoise 1 est destinée à recevoir des crayons de combustible dont le diamètre est sensiblement inférieur au côté de la section carrée des cellules 4. Les crayons de combustible sont maintenus à l'intérieur des cellules 4 par des ressorts tels que le ressort 6 de la cellule 4a et des bossettes telles que la bossette 7 de la cellule 4a représentée sur la figure 1.

Généralement, chacune des cellules 4 destinées à recevoir un crayon de combustible comporte deux parois adjacentes à 90° sur chacune desquelles est monté un ressort tel que le ressort 6, les deux autres parois adjacentes de la cellule disposées chacune en vis-à-vis d'une paroi recevant un ressort, comportant deux bossettes telles que la bossette 7 de la cellule 4a représentée sur la figure 1. Chacune des parois disposée en vis-à-vis d'une paroi munie d'un ressort comporte deux bossettes alignées suivant la direction axiale de la cellule et disposées au voisinage de la partie supérieure et au voisinage de la partie inférieure de la paroi, respectivement.

Les bossettes telles que la bossette 7 sont réalisées par découpage de la paroi de la cellule dans une zone d'extrémité de cette paroi dans la direction axiale et repoussage du métal de la paroi vers l'intérieur de la cellule.

Comme il est visible sur la figure 1, on réalise par découpage d'une paroi 5 de la cellule 4a suivant deux lignes parallèles entre elles ou suivant une ligne parallèle à un bord de la cellule et par repoussage du métal de la paroi une bossette 7 venant en saillie à l'intérieur de la cellule 4a. La bossette 7 présente une section dans un plan perpendiculaire à la paroi, ayant sensiblement la forme d'un trapèze.

On réalise également sur une paroi adjacente à la paroi 5 sur laquelle on a réalisé la bossette 7, une bossette 7', dans une partie d'extrémité axiale de la paroi, la bossette 7' étant repoussée de manière à se trouver en saillie à l'intérieur d'une cellule 4b voisine de la cellule 4a. La bossette 7' qui est une bossette d'appui d'un crayon de combustible introduit dans la cellule 4b est réalisée dans une zone d'extrémité de la paroi 5, se trouvant au-delà de l'extrémité supérieure du ressort 6.

Une seconde bossette, analogue à la bossette 7', est également réalisée dans la partie d'extrémité de la paroi de la cellule portant le ressort 6, en-dessous de l'extrémité inférieure du ressort 6.

La paroi 5 commune aux cellules voisines 4a et 4c dans laquelle sont réalisées les bossettes telles que la bossette 7 porte un ressort 6' monté dans la direction axiale de la cellule entre les bossettes réalisées dans cette paroi.

Les ressorts tels que 6 et 6' sont des ressorts rapportés en un matériau différents du matériau constituant les parois 2 et 3 des cellules 4 de la grille-entretoise. Généralement, les plaquettes 2 et 3 constituant la grille-entretoise 1 sont en alliage de zirconium et les ressorts rapportés tels que 6 et 6' sont en alliage de nickel à haute élasticité et à haute résistance.

Chacun des ressorts tels que 6 et 6' comporte deux parties d'extrémité telles que 6a par l'intermédiaire desquelles le ressort est maintenu sur la paroi de la cellule, par exemple grâce à un pontet 8 réalisé de la même manière qu'une bossette et présentant une largeur inférieure à la largeur d'une bossette et repoussé à l'intérieur de la cellule sur une distance inférieure. Entre ses zones d'extrémité telles que la zone 6a comportant une partie plane, le ressort 6 comporte une partie centrale qui peut être plane et qui se trouve en dehors d'un plan d'appui constitué par les zones d'extrémité planes du ressort 6. La partie centrale qui constitue la partie active du ressort 6 vient en saillie à l'intérieur de la cellule 4a.

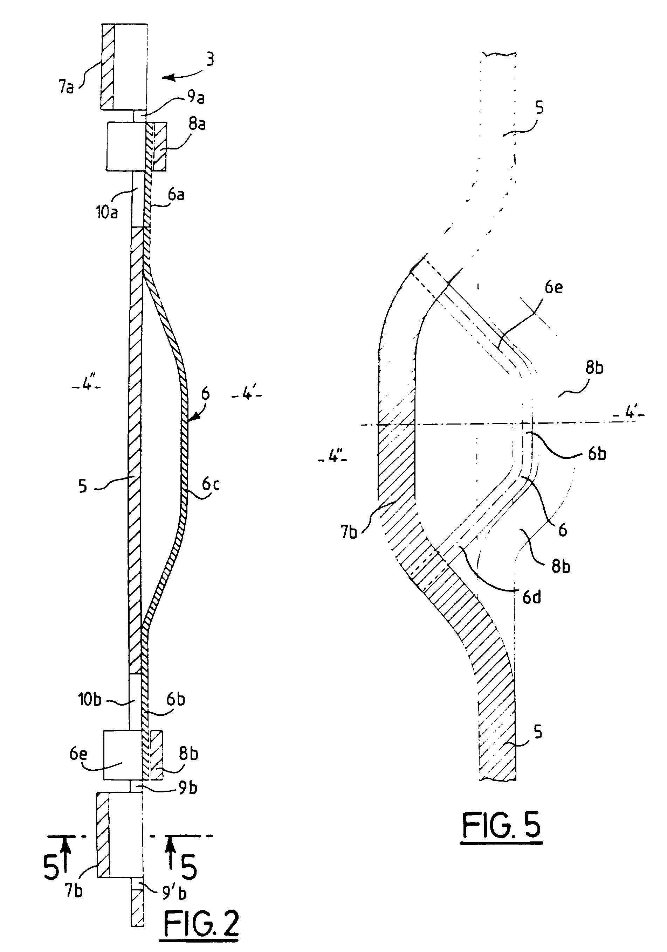

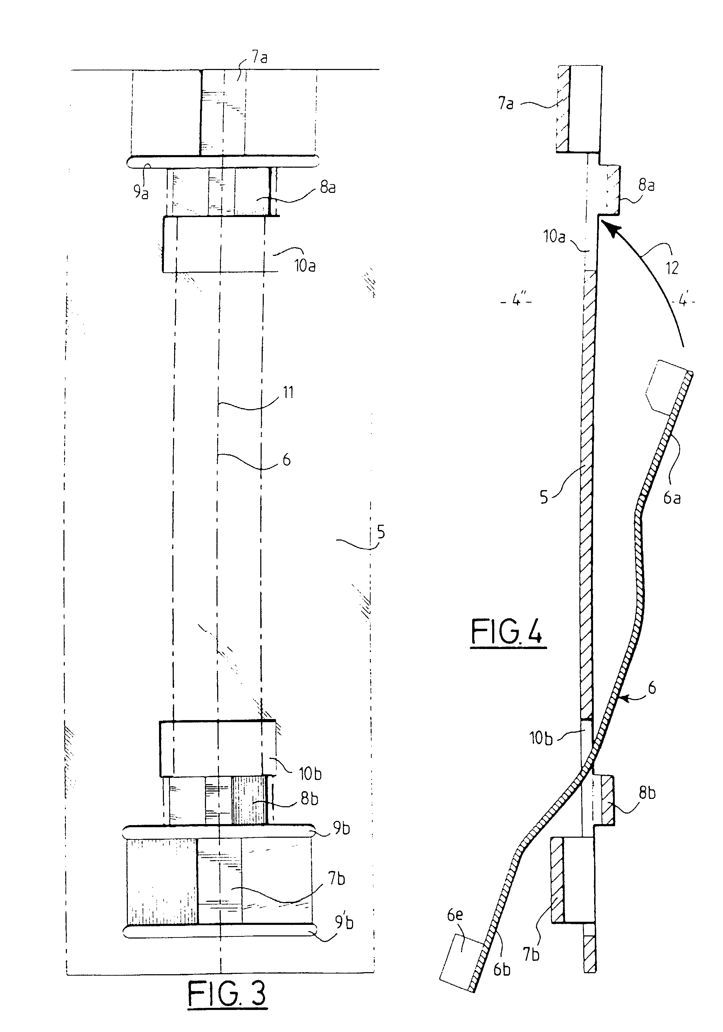

Sur les figures 2 et 3, on a représenté une partie d'une paroi 5 d'une cellule de la grille constituée par une portion d'une plaquette métallique.

La plaquette constituant la paroi 5 est découpée dans sa partie supérieure sous la forme d'une fente 9a traversant la plaquette de métal constituant la paroi 5 sur toute son épaisseur. La fente 9a est parallèle au bord supérieur de la paroi et disposée à une distance de ce bord correspondant à la hauteur d'une bossette d'appui d'un crayon combustible. Le métal de la paroi 5, entre la fente 9a et le bord supérieur est repoussé de manière qu'on réalise une bossette 7a de section sensiblement trapézoïdale, en saillie à l'intérieur d'une cellule 4" de la grille-entretoise délimitée par la paroi 5.

La plaquette 5 est également découpée dans sa partie inférieure sous la forme de deux fentes 9b et 9'b parallèles aux bords supérieur et inférieur de la paroi et donc parallèles à la fente 9a, espacées d'une distance correspondant à la hauteur d'une bossette. Le métal de la paroi est repoussé entre les deux fentes 9b et 9'b à l'intérieur de la cellule 4", de manière qu'on réalise une bossette à section trapézoïdale en saillie à l'intérieur de la cellule 4", dans la partie d'extrémité inférieure de la paroi 5.

La paroi 5 comporte également une première découpe 10a et une seconde découpe 10b de forme rectangulaire dont la longueur est inférieure à la longueur des fentes 9a, 9b et 9'b mais dont la largeur est sensiblement supérieure à la largeur des fentes 9a, 9b et 9'b.

Le bord longitudinal externe des ouvertures 10a et 10b est disposé à une distance de la fente 9a et de la fente 9b, respectivement, qui est inférieure à la hauteur des bossettes 7a et 7b. Le métal de la paroi entre le bord extérieur de l'ouverture 10a et de l'ouverture 10b et la fente 9a ou 9b située en vis-à-vis est repoussé dans une direction opposée à la direction des bossettes 7a et 7b, de manière qu'on constitue deux pontets 8a et 8b ayant une section de forme sensiblement trapézoïdale en saillie à l'intérieur de la cellule 4' voisine de la cellule 4" et séparée de celle-ci par la paroi 5.

La paroi 5 comportant les découpes, bossettes et pontets qui ont été décrits permet de recevoir un ressort 6 constitué par une simple lame métallique en alliage de nickel qui est mise en forme pour pouvoir être montée dans la direction axiale 11 sur la paroi 5 de la cellule. Sur la figure 3, le contour du ressort 6 en forme de lame a été représenté en pointillé.

Sur les figures 2 et 4, le ressort 6 a été représenté en coupe longitudinale et, respectivement dans sa position de service et au cours du montage sur la plaquette 5.

Le ressort 6 comporte suivant sa longueur, une première zone d'extrémité 6a, une seconde zone d'extrémité 6b et entre les zones d'extrémité 6a et 6b, une partie centrale 6c comportant une surface d'appui plane.

Les parties d'extrémité 6a et 6b du ressort par l'intermédiaire desquelles le ressort est maintenu sur la paroi 5 comportent chacune une partie plane venant en appui sur une face de la paroi 5 dirigée vers la cellule 4'. Les parties planes d'appui du ressort 6 sont donc situées dans un même plan constituant le plan d'appui du ressort. La partie centrale 6c du ressort 6 comporte une surface plane d'appui d'un crayon de combustible qui se trouve en dehors du plan d'appui du ressort sur la paroi 5, de manière que la partie centrale 6c du ressort se trouve en saillie à l'intérieur de la cellule 4'. La partie centrale d'appui plane du ressort est reliée aux parties d'extrémité par deux parties de jonction inclinées réalisées par pliage de la lame métallique constituant le ressort.

Comme il est visible sur les figures 2, 4 et 5, les parties d'extrémité du ressort, telles que la partie d'extrémité inférieure 6b comportent deux ailes latérales telles que les ailes latérales 6d et 6e qui sont repliées en dehors du plan d'appui de la partie d'extrémité du ressort, du côté du plan d'appui opposé à la partie centrale en saillie 6c du ressort. Les ailes latérales telles que 6d et 6e des parties d'extrémité du ressort 6 sont réalisées en prévoyant des parties d'extrémité de la lame constituant le ressort d'une largeur supérieure à la largeur de la partie courante du ressort et en repliant les parties d'extrémité en saillie latérale du ressort en direction l'une de l'autre.

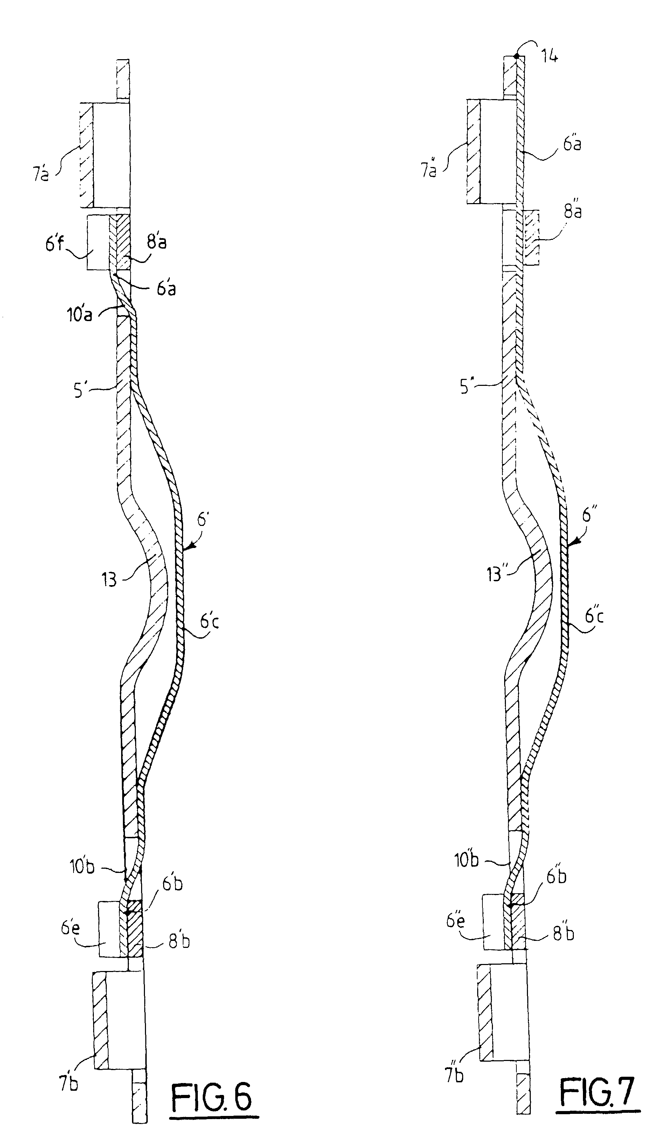

Sur la figure 5, on voit la section de la partie d'extrémité 6b du ressort qui présente une forme trapézoïdale, les deux ailes 6d et 6e de la partie d'extrémité du ressort 6 étant inclinées par rapport à la surface plane d'appui de la partie d'extrémité 6b du ressort.

Comme il est visible sur la figure 5, la forme du centre de la section de la partie d'extrémité du ressort correspond à la forme de la surface interne du pontet 8b, de manière que la partie d'extrémité du ressort puisse être engagée sous le pontet 8b.

De plus, les ailes 6d et 6e de la partie d'extrémité du ressort ont une longueur et une orientation telles que les extrémités externes des ailes 6d et 6e se trouvent en vis-à-vis de la bossette 7b de la paroi 5 en saillie dans la cellule 4" et que les ailes 6d et 6e soient dirigées sensiblement à 90° par rapport aux côtés inclinés de la section de la bossette en vis-à-vis desquels elles se trouvent, dans la position de montage du ressort.

En outre, la longueur totale du ressort 6 entre son extrémité supérieure et son extrémité inférieure est légèrement inférieure à la distance séparant la bossette 7a de la bossette 7b.

Lorsque le ressort 6 est monté sur la paroi 5, ses extrémités longitudinales sont séparées par un jeu, des bossettes 7a et 7b. Cependant, les ailes telles que 6d et 6e assurent une retenue du ressort 6, du fait qu'elles se trouvent en vis-à-vis d'une partie des bossettes 7a et 7b. Dans sa position de montage représentée sur les figures 2 et 5, le ressort 6 est donc parfaitement maintenu par les pontets 8a et 8b et par les bossettes 7a et 7b. Le maintien du ressort en forme de lame simple est réalisé sans qu'il soit nécessaire d'effectuer de soudure.

Sur la figure 4, on a représenté la paroi 5 de la grille et le ressort 6 pendant une phase du montage du ressort 6 sur la paroi 5.

Pour effectuer le montage du ressort 6, on engage la lame du ressort 6 à travers l'ouverture 10b entre le pontet 8b et la partie centrale plane d'appui de la paroi 5, la partie d'extrémité 6a du ressort présentant une section en forme de trapèze étant engagée en premier dans l'ouverture 10b. On glisse le ressort dans l'ouverture 10b puis on exerce une poussée schématisée par la flèche 12 sur la partie d'extrémité 6a du ressort, de manière à l'engager en-dessous du pontet 8a, en continuant à faire glisser l'ensemble du ressort par l'ouverture 10b. A la fin de la mise en place du ressort, la partie d'extrémité 6b du ressort comprenant les ailes 6d et 6e vient se loger sous le pontet 8b. Simultanément, la partie opposée du ressort qui est engagée dans l'ouverture 10a de la paroi 5 vient se loger sous le pontet 8a. Le ressort est alors en place, comme représenté sur la figure 2. La mise en place du ressort est donc extrêmement simple et ne nécessite aucune opération de soudage ou de formage.

Sur la figure 6, on a représenté une variante de réalisation d'un ressort et de ses moyens de maintien sur une paroi d'une cellule d'une grille-entretoise suivant l'invention.

Les éléments correspondants sur les figures 2 à 5 d'une part et 6 d'autre part portent les mêmes repères avec cependant l'exposant ' (prime) en ce qui concerne les éléments représentés sur la figure 6.

La paroi 5' est découpée et repoussée dans ses zones d'extrémité, de manière à présenter deux bossettes 7'a et 7'b.

Des ouvertures rectangulaires 10'a et 10'b sont réalisées à la suite des bossettes 7'a et 7'b, de manière qu'une partie 8'a ou 8'b de la plaquette soit intercalée entre la bossette et l'ouverture correspondante. Les découpes et ouvertures de la paroi sont donc réalisées de manière identique aux découpes de la paroi 5 représentée par exemple sur la figure 2. La paroi comporte donc successivement, à partir d'une bossette 7'a ou 7'b en direction de la seconde bossette, une partie 8'a ou 8'b d'appui du ressort adjacente à la bossette et une ouverture 10'a ou 10'b adjacente à la partie d'appui 8'a ou 8'b.

A la différence du mode de réalisation des figures 2 à 5, la partie d'appui 8'a ou 8'b de la paroi n'est pas repoussée sous la forme d'un pontet en saillie par rapport à la paroi 5 du côté opposé à la bossette 7'a. Les parties d'appui 8'a et 8'b du ressort 6' se trouvent donc dans l'alignement des faces de la plaquette.

Le ressort 6' présente deux parties d'extrémité 6'a et 6'b assurant son montage sur la paroi 5' qui comportent chacune deux ailes inclinées repliées l'une vers l'autre telles que l'aile 6'e de la partie inférieure du ressort ou l'aile 6'f de la partie supérieure du ressort. Entre les parties d'extrémité 6'a et 6'b permettant son montage, le ressort 6' comporte une partie centrale d'appui 6'c qui peut être avantageusement réalisée sous la forme d'une surface plane reliée aux parties d'extrémité par des branches inclinées du ressort réalisées par pliage de la lame métallique constituant le ressort.

Afin de permettre un engagement des parties d'extrémité 6'a et 6'b du ressort à travers les ouvertures 10'a et 10'b pour leur mise en appui sous les parties d'appui 8'a et 8'b de la paroi 5', les branches inclinées du ressort 6' présentent deux parties successives ayant des pentes différentes. On peut ainsi glisser le ressort 6' par les ouvertures 10'b et 10'a et sous les parties d'appui 8'a et 8'b de la paroi 5'. Il est à remarquer que le ressort 6' dans sa position de montage vient en appui par ses parties d'extrémité contre la surface de la paroi 5' dirigée vers la cellule située à l'opposé de la cellule dans laquelle le ressort 6' vient en saillie.

Il est à remarquer également que la paroi 5' comporte dans sa partie centrale, dans une position équidistante par rapport aux ouvertures 10'a et 10'b, une bossette en forme de calotte sphérique 13 en saillie vers l'intérieur de la cellule dans laquelle est monté le ressort 6' et en vis-à-vis de la partie d'appui en saillie 6'c du ressort 6'. La bossette 13 assure une mise en butée de la partie centrale active du ressort 6' dans le cas où un effort excessif est exercé sur le ressort 6' par l'intermédiaire du crayon de combustible introduit dans la cellule. Un tel effort excessif sur le crayon peut être exercé par exemple lors de la manutention de l'assemblage combustible, en cas d'accrochage avec un obstacle ou un autre assemblage combustible. On évite ainsi un déplacement du crayon et une déformation du ressort 6'.

Sur la figure 7, on a représenté une paroi d'une grille-entretoise suivant l'invention et suivant une seconde variante, sur laquelle est fixé un ressort. Les éléments correspondants sur la figure 7 et sur les figures 2 à 5 ou 6 portent les mêmes repères avec toutefois l'exposant " (seconde) en ce qui concerne les éléments représentés sur la figure 7 relative à une seconde variante de réalisation.

La paroi 5" sur laquelle est fixé le ressort 6" comporte à ses extrémités, une première bossette 7"a et une seconde bossette 7"b. Les bossettes 7"a et 7"b sont obtenues en réalisant par découpage deux fentes parallèles traversant la paroi 5" et en repoussant le métal de la paroi entre les deux fentes.

On réalise de plus, dans une disposition adjacente à la bossette 7"a, à la suite de la bossette 7"a dans la direction de la seconde bossettes 7"b, un pontet 8"a en découpant une troisième fente parallèle aux deux fentes délimitant la bossette 7"a dans le métal de la paroi 5" et en repoussant le métal entre la seconde et la troisième fentes pour réaliser un pontet 8"a dont la largeur et la distance de repoussage par rapport à la paroi 5" sont inférieures aux dimensions correspondantes de la bossette 7"a.

On réalise de plus, par découpage, une ouverture rectangulaire 10"b à travers la paroi 5" à une certaine distance de la bossette 7"b en direction de la première bossette 7"a, de manière à ménager une partie d'appui 8"b sur la paroi 5" dans une disposition adjacente par rapport à la bossette 7"b.

Le ressort 6" comporte une partie centrale active en saillie 6"c et deux parties d'extrémité 6"a et 6"b par l'intermédiaire desquelles le ressort 6" peut être fixé sur la paroi 5".

La partie d'extrémité 6"a est entièrement plane et la partie 6"b comporte deux ailes repliées l'une vers l'autre en dehors du plan de la partie d'extrémité plane du ressort, dans une direction opposée à la partie centrale active 6"c du ressort en saillie par rapport aux parties planes des extrémités du ressort. On a représenté l'une des ailes 6"e de la partie d'extrémité 6"b du ressort 6" sur la figure 7.

Le montage du ressort 6" sur la paroi 5" est réalisé en introduisant la partie plane d'extrémité 6"a du ressort 6" sous le pontet 8"a permettant de maintenir la partie plane d'extrémité 6"a contre la plaquette 5" et en introduisant la seconde partie d'extrémité 6"b du ressort 6" dans l'ouverture 10"b. De préférence, la partie d'extrémité 6"b est introduite dans l'ouverture 10"b avant de replier les ailes de cette partie d'extrémité telle que 6"e en dehors du plan de l'extrémité du ressort. Les ailes telles que 6"e sont repliées l'une vers l'autre après qu'on ait réalisé la pose du ressort, de manière à réaliser la retenue et le verrouillage du ressort 6" par la butée 7"b, par l'intermédiaire des ailes telles que 6"e de la partie d'extrémité du ressort.

La fixation du ressort est complétée par un point de soudure 14 entre l'extrémité de la partie 6"a du ressort et le bord supérieur de la paroi 5".

La paroi 5" peut comporter avantageusement, dans sa partie centrale, une bossette 13" en forme de calotte sphérique pour limiter la déformation du ressort 6" sur lequel un crayon combustible vient en appui.

Dans tous les cas, la grille-entretoise suivant l'invention permet de réaliser de manière simple la fabrication et la pose des ressorts sur les parois des cellules de la grille. En outre, le maintien et l'immobilisation des ressorts sur les parois sont réalisés de manière satisfaisante par l'intermédiaire des bossettes, des pontets ou des parties d'appui de la paroi recevant le ressort.

La réalisation suivant l'invention permet donc de simplifier considérablement la fabrication des grilles-entretoises pour assemblage de combustible.

L'invention ne se limite pas aux modes de réalisation qui ont été décrits.

C'est ainsi qu'on peut réaliser les bossettes ou pontets d'une manière différente de celles qui ont été décrites.

On peut également associer les bossettes, pontets et parties d'appui des parois recevant les ressorts de manière différente de celles qui ont été décrites.

La ou les ouvertures traversant la paroi sur laquelle est monté le ressort peuvent avoir toute dimension et toute forme facilitant l'introduction et le montage du ressort.

L'invention s'applique à toute grille-entretoise de structure associée à d'autres grilles identiques dans l'ossature d'un assemblage de combustible ou à des grilles-entretoises de types différents réalisées pour remplir des fonctions de retenue des crayons ou de brassage du fluide traversant l'assemblage de combustible dans le réacteur en fonctionnement. La réalisation du ressort comme décrit permet d'obtenir des distances entre les crayons et des dimensions des espaces de circulation d'eau autour des crayons sensiblement constantes suivant toute la surface de la grille-entretoise.

## Revendications

1. Grille-entretoise d'un assemblage de combustible pour un réacteur nucléaire constituée par des plaquettes métalliques entrecroisées (2, 3) délimitant un réseau régulier de cellules (4) dont une partie au moins comporte, pour chaque cellule (4, 4a, 4b, 4', 4"), au moins une paroi (5) de séparation avec une cellule voisine constituée par une portion d'une plaquette, sur laquelle est rapporté et maintenu un ressort (6, 6', 6") de maintien d'un crayon de combustible destiné à être logé dans la cellule (4, 4a), la paroi de la cellule (4, 4a) étant découpée et repoussée dans la cellule voisine (4b, 4"), suivant deux zones d'extrémité espacées dans une direction longitudinale de montage du ressort (6, 6', 6") pour constituer deux bossettes (7, 7', 7a, 7b, 7'a, 7'b) de maintien d'un crayon dans la cellule voisine (4", 4b) caractérisée par le fait que, pour chacune des parois (5) sur laquelle est rapporté un ressort (6, 6', 6"), le ressort (6, 6', 6") est constitué par une lame simple métallique comportant deux parties d'extrémité (6a, 6b, 6'a, 6'b, 6"a, 6"b) sensiblement dans un même plan et une partie centrale (6c, 6'c, 6"c) en dehors du plan des parties d'extrémité, l'une au moins des parties d'extrémité étant munie latéralement de deux ailes (6d, 6e, 6'e, 6"e, 6'f) repliées en dehors du plan de la partie d'extrémité (6a, 6b, 6'a, 6'b, 6"b) dans une directicn opposée à la partie centrale (6c, 6'c, 6"c) du ressort (6, 6', 6"), et que la paroi (5, 5', 5") destinée à recevoir un ressort rapporté comporte dans une disposition adjacente à chacune des bossettes (7a, 7b, 7'a, 7'b, 7"a, 7"b), en direction de la seconde bossette, une partie (8a, 8b, 8'a, 8'b, 8"a, 8"b) de maintien d'une extrémité du ressort (6, 6', 6") et, dans une disposition adjacente à l'une au moins des parties de maintien (8a, 8b, 8'a, 8'b, 8"a, 8"b), au moins une ouverture (10a, 10b, 10'a, 10'b, 10"b) traversant la paroi.

2. Grille-entretoise suivant la revendication 1, caractérisée par le fait que la paroi (5) comporte deux parties de maintien (8a, 8b) des extrémités (6a, 6b) du ressort (6) constituées par des pontets réalisés par découpage et repoussage des portions de la paroi (5), de manière à se trouver en saillie par rapport à une face de la paroi (5) opposée à une face de la paroi (5) sur laquelle les bossettes (7a, 7b) sont en saillie.

3. Grille-entretoise suivant la revendication 2, caractérisée par le fait que la paroi (5) comporte dans une disposition adjacente à chacun des pontets adjacents à une première bossette (7a, 7b), une ouverture traversante (10a, 10b) en direction de la seconde bossette (7a, 7b).

4. Grille-entretoise suivant la revendication 1, caractérisée par le fait que les parties de maintien (8'a, 8'b) des extrémités (6'a, 6'b) du ressort (6') sont constituées par des parties d'appui de la paroi (5') intercalées chacune, dans la direction axiale de la paroi (5'), entre une bossette (7'a, 7'b) et une ouverture (10' a, 10'b) traversant la paroi (5'), les parties d'extrémité (6'a, 6'b) du ressort (6') venant en appui contre les parties d'appui (8'a, 8'b) de la paroi (5'), du côté de la paroi (5') sur lequel les bossettes (7'a, 7'b) sont en saillie, le ressort (6') étant plaqué par rappel élastique en flexion contre les parties (8'a, 8'b).

5. Grille-entretoise suivant la revendication 1, caractérisée par le fait que la paroi (5") destinée à recevoir un ressort rapporté (6") comporte, dans une disposition adjacente par rapport à une première bossette (7"a) dans la direction de la seconde bossette (7"b), un pontet (8"a) réalisé par découpage et repoussage de la paroi (5") dans une direction opposée à la bossette (7"a) et dans une disposition adjacente à la seconde bossette (7"b), une partie d'appui (8"b) de la paroi (5") puis une ouverture (10"b) traversant la paroi (5"), dans la direction de la première bossette (7"a), le ressort (6") comportant une première partie d'extrémité (6"a) entièrement plane et une seconde partie d'extrémité (6"b) comportant deux ailes latérales (6"e) repliées en dehors d'un plan d'appui d'une partie plane de la partie d'extrémité (6"b).

6. Grille-entretoise suivant la revendication 5, caractérisé par le fait qu'un bord de la partie d'extrémité plane (6"a) du ressort (6") est fixé par une soudure (14) sur un bord d'extrémité de la paroi (5").

7. Grille-entretoise suivant l'une quelconque des revendications 1 à 6, caractérisée par le fait que les ailes (6d, 6e, 6'e, 6"e) d'au moins une partie d'extrémité du ressort (6, 6', 6") présentent une inclinaison et une longueur telles qu'au moins une partie d'extrémité des ailes (6d, 6e, 6'e, 6"e) se trouve en vis-à-vis d'une partie d'une bossette (7a, 7b, 7'a, 7'b, 7"b) et présente une direction sensiblement perpendiculaire à un bord de la bossette (7a, 7b, 7'a, 7'b, 7"b).

8. Grille-entretoise suivant l'une quelconque des revendications 1 à 7, caractérisée par le fait qu'au moins une partie de maintien (8a, 8b, 8"a) d'une extrémité du ressort (6, 6") est réalisée sous la forme d'un pontet repoussé par rapport au plan de la paroi (5, 5") dont le profil dans un plan perpendiculaire à la paroi (5, 5") permet d'assurer le logement d'une partie d'extrémité du ressort (6, 6") muni latéralement de deux ailes (6d, 6e, 6"e) pliées en dehors du plan de la partie d'extrémité du ressort (6, 6").

9. Grille-entretoise suivant l'une quelconque des revendications 1 à 8, caractérisée par le fait que le ressort (6, 6', 6") comporte une partie centrale (6c, 6'c, 6"c) au moins partiellement plane pour assurer l'appui d'un crayon de combustible.

10. Grille-entretoise suivant l'une quelconque des revendications 1 à 9, caractérisée par le fait que la paroi (5', 5") comporte dans une partie centrale sensiblement équidistante des bossettes (7'a, 7"a, 7'b, 7"b) dans la direction axiale, une bossette (13, 13") en saillie à l'intérieur de la cellule à l'aplomb de la partie centrale (6'c, 6"c) du ressort (6', 6").

## Patentansprüche

1. Abstandshaltegitter einer Brennstoffkassette für einen Kernreaktor dargestellt durch sich kreuzende Metallstege (2, 3), die ein Netz regelmäßiger Zellen (4) begrenzen, wobei mindestens ein Bereich jeder Zelle (4, 4a, 4b, 4', 4") zusammen mit einer Nachbarzelle mindestens eine Trennwand (5) umfaßt, die durch einen Teil eines Stegs gebildet wird, auf der eine Haltefeder (6, 6', 6") eines Brennstabs zusammengesetzt und festgehalten wird, wobei der Brennstab in der Zelle (4, 4a) lagert, wobei die Zellwand (4, 4a) ausgeschnitten und entlang zweier Endzonen in die Nachbarzelle (4b, 4") gedrückt ist, wobei die Endzonen in einer Montagelängsrichtung der Feder (6, 6', 6") beabstandet sind, um zwei Haltehöcker (7, 7', 7a, 7b, 7'a, 7'b) eines Stabes in der Nachbarzelle (4", 4b) zu bilden,
dadurch gekennzeichnet, daß
für jede Wand (5), auf der eine Feder (6, 6', 6") zusammengesetzt ist, die Feder (6, 6', 6") aus einem einfachen metallischen Blatt mit zwei Endbereichen (6a, 6b, 6'a, 6'b, 6"a, 6"b) gebildet ist, die sich im wesentlichen in derselben Ebene befinden und einen mittleren Bereich (6c, 6'c, 6"c) aufweisen, der sich außerhalb der Ebene der Endbereiche befindet, wobei mindestens einer der Endbereiche mit zwei Seitenflügeln (6d, 6e, 6'e, 6"e, 6'f) versehen ist, die aus der Ebene des Endbereichs (6a, 6b, 6'a, 6'b, 6"b) in der zum mittleren Bereich (6c, 6'c, 6"c) der Feder (6, 6', 6") entgegengesetzten Richtung gebogen sind, und daß die Wand (5, 5', 5"), die eine zusammengesetzte Feder aufnimmt, in einer zu jedem Höcker (7a, 7b, 7'a, 7'b, 7"a, 7"b) benachbarten Umgebung in Richtung des zweiten Höckers einen Haltebereich (8a, 8b, 8'a, 8'b, 8"a, 8"b) für ein Federende (6, 6', 6") und in einer Umgebung, die zu mindestens einem Haltebereich (8a, 8b, 8'a, 8'b, 8"a, 8"b) benachbart ist, mindestens eine durch die Wand gehende Öffnung (10a, 10b, 10'a, 10'b, 10"b) aufweist.

2. Abstandshaltegitter nach Anspruch 1, dadurch gekennzeichnet, daß die Wand (5) zwei Haltebereiche (8a, 8b) der Federenden (6a, 6b) umfaßt, wobei die Haltebereiche durch Sicherungsbügel gebildet sind, die durch Ausschneiden und Drücken der Teile der Wand (5) entstehen, so daß sie aus einer Fläche der Wand (5) hervorstehen, wobei diese Fläche einer Fläche der Wand (5), aus der die Höcker (7a, 7b) hervorstehen, gegenüberliegt.

3. Abstandshaltegitter nach Anspruch 2, dadurch gekennzeichnet, daß die Wand (5) in einer zu jedem Sicherungsbügel benachbarten Umgebung eine in Richtung des zweiten Höckers (7a, 7b) durchgehende Öffnung umfaßt.

4. Abstandshaltegitter nach Anspruch 1, dadurch gekennzeichnet, daß die Halteteile (8'a, 8'b) der Enden (6'a, 6'b) der Feder (6') durch Anschlagteile der Wand (5') gebildet sind, wobei jedes Ende zwischen einem Höcker (7'a, 7'b) und einer durch die Wand (5') gehenden Öffnung (10'a, 10'b) in axialer Wandrichtung eingeschoben ist, wobei die Endteile (6'a, 6'b) der Feder (6') in Anschlag gegen die Anschlagteile (8'a, 8'b) der Wand (5') auf der Seite der Wand (5') gelangen, auf der die Höcker (7'a, 7'b) hervorstehen, wobei die Feder (6') durch die elastische Federkraft gegen die Teile (8'a, 8'b) gedrückt wird.

5. Abstandshaltegitter nach Anspruch 1, dadurch gekennzeichnet, daß die Wand (5"), die dazu bestimmt ist, eine zusammengesetzte Feder (6") aufzunehmen, in einer zu einem ersten Höcker (7"a) benachbarten Umgebung in Richtung des zweiten Höckers (7"b) einen Sicherungsbügel (8"a) umfaßt, der durch Ausschneiden der Wand (5") und durch Drücken der Wand (5") in zum Höcker (7"a) entgegengesetzter Richtung gebildet ist, und in einer zum zweiten Höcker (7"b) benachbarten Umgebung ein Anschlagteil (8"b) der Wand (5") und ferner eine durch die Wand (5") gehende Öffnung (10"b) umfaßt, wobei in Richtung des ersten Höckers (7"a) die Feder (6") ein erstes vollständig ebenes Endteil (6"a) und ein zweites Endteil (6"b) mit zwei Seitenflügeln (6"e) aufweist, die aus einer Anschlagsebene eines flachen Bereichs des Endteils (6"b) gebogen sind.

6. Abstandshaltegitter nach Anspruch 5, dadurch gekennzeichnet, daß ein Rand des flachen Endteils (6"a) der Feder (6") durch eine Schweißstelle (14) auf dem äußeren Rand der Wand (5") befestigt ist.

7. Abstandshaltegitter nach einem der Ansprüche 1 bis 6, dadurch gekennzeichnet, daß die Flügel (6d, 6e, 6'e, 6"e) mindestens eines Endteils der Feder (6, 6', 6") eine Neigung und eine Länge aufweisen, so daß sich mindestens ein Endteil der Flügel (6d, 6e, 6'e, 6"e) gegenüber einem Teil des Höckers (7a, 7b, 7'a, 7'b, 7"b) befindet, und eine im wesentlichen zu einem Rand des Höckers (7a, 7b, 7'a, 7'b, 7"b) senkrechte Richtung darstellt.

8. Abstandshaltegitter nach einem der Ansprüche 1 bis 7, dadurch gekennzeichnet, daß mindestens ein Halteteil (8a, 8b, 8"a) von einem Federende (6, 6") in der Gestalt eines Sicherungsbügels gebildet ist, der aus der Wandebene (5, 5") gedrückt ist, wobei in einer Ebene senkrecht zur Wand (5, 5") das Profil des Halteteils die Lagerung eines Endteils der Feder (6, 6") mit zwei Seitenflügeln (6d, 6e, 6"e) gewährleisten kann, die aus der Ebene des Endteils der Feder (6, 6") gebogen sind.

9. Abstandshaltegitter nach einem der Ansprüche 1 bis 8, dadurch gekennzeichnet, daß die Feder (6, 6', 6") zumindest einen teilweise flachen mittleren Bereich (6c, 6'c, 6"c) umfaßt, damit der Halt eines Brennstabes gewährleistet ist.

10. Abstandshaltegitter nach einem der Ansprüche 1 bis 9, dadurch gekennzeichnet, daß in der axialen Richtung die Wand (5', 5") in einem mittleren Bereich, der sich im wesentlichen im selben Abstand zu den Höckern (7'a, 7"a, 7'b, 7"b) befindet, einen Höcker (13, 13") umfaßt, der in das Innere der Zelle senkrecht zum mittleren Bereich (6'c, 6"c) der Feder (6', 6") hineinragt.

## Claims

1. Spacer grid for a fuel assembly in a nuclear reactor, consisting of intersecting metal plates (2, 3) defining a regular network of cells (4) at least some of which comprise, for each cell (4, 4a, 4b, 4', 4"), at least one wall (5) separating it from a neighbouring cell, consisting of a portion of a plate, on which a spring (6, 6', 6") is mounted and held, said spring holding a fuel rod adapted to be accommodated in the cell (4, 4a), the wall of the cell (4, 4a) being cut away and recessed into the adjacent cell (4b, 4"), in two end zones spaced in a longitudinal direction of mounting of the spring (6, 6', 6"), to constitute two bosses (7, 7', 7a, 7b, 7'a, 7'b) for securing a rod in the adjacent cell (4", 4b), characterised in that, for each of the walls (5) on which a spring (6, 6', 6") is mounted, the spring (6, 6', 6") consists of a simple metal blade comprising two end parts (6a, 6b, 6'a, 6'b, 6"a, 6"b) substantially in the same plane and a central part (6c, 6'c, 6"c) outside the plane of the end parts, at least one of the end parts being laterally provided with two wings (6d, 6e, 6'e, 6"e, 6'f) folded outside the plane of the end part (6a, 6b, 6'a, 6'b, 6"b) in a direction opposite to the central part (6c, 6'c, 6"c) of the spring (6, 6', 6"), and in that the wall (5, 5', 5") adapted to receive a spring mounted thereon comprises, in an arrangement adjacent to each of the bosses (7a, 7b, 7'a, 7'b, 7"a, 7"b) in the direction of the second boss, a part (8a, 8b, 8'a, 8'b, 8"a, 8"b) for holding an end spring (6, 6', 6") and, in an arrangement adjacent to at least one of the holding parts (8a, 8b, 8'a, 8'b, 8"a, 8"b), at least one opening (10a, 10b, 10'a, 10'b, 10"b) passing through the wall.

2. Spacer grid according to claim 1, characterised in that the wall (5) comprises two parts (8a, b) for holding the ends (6a, 6b) of the spring (6), consisting of bridges formed by cutting and pushing back portions of the wall (5), so as to project relative to a surface of the wall (5) opposite a side of the wall (5) on which the bosses (7a, 7b) project.

3. Spacer grid according to claim 2, characterised in that the wall (5) comprises, in an arrangement adjacent to each of the bridges adjacent to a first boss (7a, 7b), a through-opening (10a, 10b) directed towards the second boss (7a, 7b).

4. Spacer grid according to claim 1, characterised in that the parts (8'a, 8'b) for holding the ends (6'a, 6'b) of the spring (6') consist of support members for the wall (5'), each being intercalated, in the axial direction of the wall (5'), between a boss (7'a, 7'b) and an opening (10'a, 10'b) passing through the wall (5'), the end parts (6'a, 6'b) of the spring (6') abutting on the support members (8'a, 8'b) of the wall (5'), on the side of the wall (5') on which the bosses (7'a, 7'b) project, the spring (6') being resiliently bent back against the members (8'a, 8'b) .

5. Spacer grid according to claim 1, characterised in that the wall (5") adapted to receive an added-on spring (6") comprises, in an arrangement which is adjacent to a first boss (7"a) in the direction of the second boss (7"b), a bridge (8"a) produced by cutting the wall (5") and pushing it back in a direction opposite to the boss (7"a) and in an arrangement adjacent to the second boss (7"b), a support member (8"b) for the wall (5") then an opening (10"b) passing through the wall, in the direction of the first boss (7"a), the spring (6") comprising a first, entirely flat end portion (6"a) and a second end portion (6"b) comprising two lateral wings (6"e) folded outside a support plane for a flat part of the end portion (6"b).

6. Spacer grid according to claim 5, characterised in that one edge of the flat end portion (6"a) of the spring (6") is fixed by a weld (14) to an end edge of the wall (5").

7. Spacer grid according to any one of claims 1 to 6, characterised in that the wings (6d, 6e, 6'e, 6"e) of at least onto end portion of the spring (6, 6', 6") have an inclination and a length such that at least one end portion of the wings (6d, 6e, 6'e, 6"e) is located opposite a part of a boss (7a, 7b, 7'a, 7'b, 7"b) and is directed substantially perpendicular to one edge of the boss (7a, 7b, 7'a, 7'b, 7"b).

8. Spacer grid according to any one of claims 1 to 7, characterised in that at least one part (8a, 8b, 8"a) for holding one end of the spring (6, 6") is made in the form of a bridge which is recessed relative to the plane of the wall (5, 5") the profile of which, in a plane perpendicular to the wall (5, 5"), accommodates an end portion of the spring (6, 6") provided laterally with two wings (6d, 6e, 6"e) folded outside the plane of the end portion of the spring (6, 6").

9. Spacer grid according to any one of claims 1 to 8, characterised in that the spring (6, 6', 6") comprises a central portion (6c, 6'c, 6"c) which is at least partly flat to provide support for a fuel rod.

10. Spacer grid according to any one of claims 1 to 9, characterised in that the wall (5, 5") comprises, in a central part which is substantially equidistant from the bosses (7'a, 7"a, 7'b, 7"b) in the axial direction, a boss (13, 13") projecting into the cell aligned with the central part (6'c, 6"c) of the spring (6', 6").
